# FASCICULE DE BREVET EUROPEEN

(11) **EP 0 399 034 B1**
(45) Date de publication et mention de la délivrance du brevet: **12.01.1994**
(21) Numéro de dépôt: 90900907.8
(22) Date de dépôt: 29.11.1989
(51) Int. Cl.: A47G 19/22, A47J 43/27

(54) **DISPOSITIF POUR LA PRESENTATION EN COUCHES SUPERPOSEES DE LIQUIDES DE DIFFERENTES DENSITES, EN PARTICULIER DE LIQUIDES ALIMENTAIRES**
VORRICHTUNG ZUM SCHICHTWEISEN HERSTELLEN VON GETRÄNKEN
DEVICE FOR THE PRESENTATION IN SUPERIMPOSED LAYERS OF DIFFERENT DENSITY LIQUIDS, IN PARTICULAR, LIQUID FOODS

(30) Priorité: 29.11.1988 FR 8815797
(43) Date de publication de la demande: 28.11.1990
(73) Titulaire: BASCH, Armand, F-67240 Oberhoffen-sur-Moder (FR)
(72) Inventeur: BASCH, Armand, F-67240 Oberhoffen-sur-Moder (FR)
(74) Mandataire: Nuss, Pierre
(86) Numéro de dépôt international: FR8900617
(87) Numéro de publication internationale: WO9006074

(56) Documents cités:
- BE-A- 899 988
- US-A- 2 740 571
- US-A- 3 185 189

## Description

La présente invention concerne le domaine de la préparation de liquides, en particulier de liquides alimentaires, notamment servis en apéritif ou en dessert, et a pour objet un dispositif pour la présentation en couches superposées de liquides de ce type de différentes densités.

Actuellement la préparation de liquides alimentaires, utilisés comme apéritif ou comme dessert et constitués par plusieurs composants de densités différentes, est réalisée en versant directement les différents composants dans un verre affecté à cet effet. Généralement, les composants se mélangent alors plus ou moins intimement avant leur service à table. Ce mélange, qui doit être effectué avant la consommation, a, cependant, pour inconvénient une présentation assez quelconque du produit servi, notamment dans le cas du mélange d'un alcool et d'une autre boisson, chaude ou froide, de couleur très différente.

Pour obtenir une présentation originale et alléchante de liquides différents, dans leur couleur et dans leur densité, dans un même verre, il existe en restauration des personnels spécialement qualifiés, dont le coup de main leur permet de réaliser une superposition par couches de liquides de couleur et de densité différentes et ainsi d'obtenir une présentation originale du produit lors du service.

Toutefois, l'utilisation d'un tel personnel est réduite à un nombre d'établissements très restreints du fait qu elle entraíne un surcoût salarial important. En outre, une telle présentation d'un liquide à plusieurs composants est toujours sujette a des aléas de manipulation entraînant un mélange plus ou moins important des différents composants et néfaste à la présentation désirée.

Pour obvier à cet inconvénient, il a été proposé par BE-A-899 988 un dispositif destiné à réaliser une superposition de liquides de diverses densités, ce dispositif étant constitué par un corps destiné à être posé sur un verre et muni d'un réceptacle de réception d'un liquide, dont le débit est régulé au moyen d'une vanne coulissante, ledit liquide s'écoulant par l'intermédiaire d'une pièce flottante en forme de disque ou hémisphérique en couches successives superposées.

Toutefois, le dispositif selon ce document présente des difficultés de guidage de la pièce flottante du fait d'un risque important de blocage de cette dernière dans le corps, notamment suite à un encrassement dû au sucre contenu dans les différents liquides utilisés, ledit sucre se fixant au niveau du guidage qui est quasiment inaccessible pour le lavage.

En outre, la pièce flottante utilisée présente des parties en saillie provoquant un mélange des couches par création de remous lors du retrait. De plus, cette pièce flottante ne permet pas l'obtention d'un écoulement laminaire, ce dernier ne pouvant d'ailleurs non plus être obtenu le long de la tige de guidage, du fait d'un débit variable de liquide réglé au moyen de la vanne coulissante.

Par ailleurs, la prévision même d'une vanne de réglage entraîne une difficulté supplémentaire dûe à l'usure normale des pièces constitutives, ce qui intervient également de manière défavorable sur l'écoulement des liquides, une difficulté supplémentaire étant dûe au montage même de la tige de guidage de la pièce flottante qui risque d'être heurtée à tout moment pendant le réglage de la vanne et de provoquer alors des remous néfastes à une bonne présentation.

La présente invention a pour but de pallier ces inconvénients.

Elle a, en effet, pour objet un dispositif pour la présentation en couches superposées de liquides de différentes densités, en particulier de liquides alimentaires, qui est essentiellement constitué par un corps destiné à être monté sur un verre à remplir, et présentant un réceptacle de réception des liquides, du côté opposé à celui s'appuyant sur le verre, et par un flotteur venant au contact du liquide dans le verre et relié à une tige guidée dans le corps, caractérisé en ce que le flotteur est sphérique et en ce que la tige est guidée dans un canal de décharge du réceptacle de réception des liquides en direction du verre, aménagé dans le corps et débouchant dans ledit réceptacle, cette tige étant munie à son extrémité opposée au flotteur d'un arrêt formant simultanément une poignée de manutention.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en coupe du dispositif conforme à l'invention ;
la figure 2 est une vue analogue à la figure 1 d'une variante de réalisation conforme à l'invention, et
la figure 3 est une vue partielle en plan du dispositif suivant la figure 2.

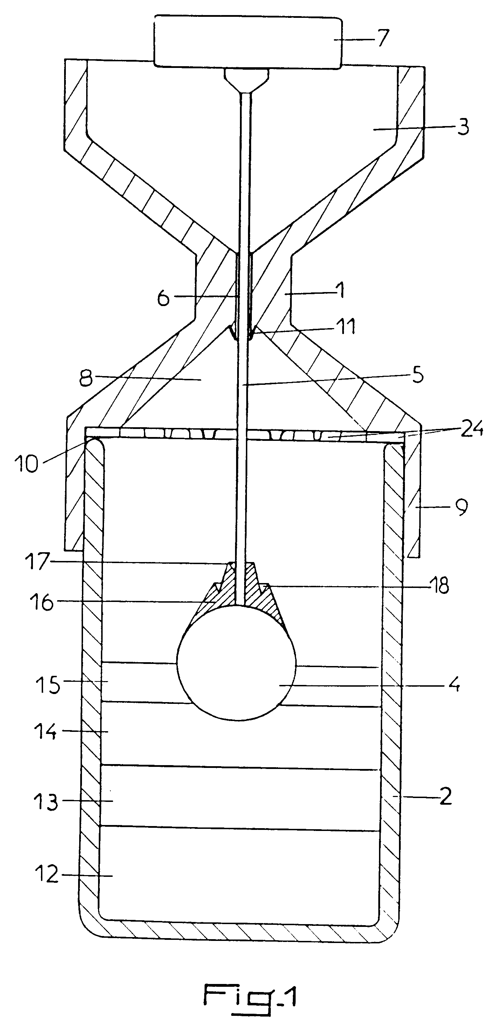

Le dispositif pour la présentation en couches superposées de liquides de différentes densités, en particulier de liquides alimentaires, conforme à l'invention, représenté, à titre d'exemple, sur la figure 1 des dessins annexés, qui est essentiellement constitué par un corps 1 destiné à être monté sur un verre à remplir 2, et présentant un réceptacle 3 de réception des liquides, du côté opposé à-celui s'appuyant sur le verre 2, et par un flotteur 4 venant au contact du liquide dans le verre 2 et relié à une tige 5 guidée dans le corps 1, est caractérisé en ce que le flotteur 4 est sphérique et en ce que la tige 5 est guidée dans un canal de décharge 6 du réceptacle 3 de réception des liquides en direction du verre 2, aménagé dans le corps 1 et débouchant dans ledit réceptacle 3, cette tige 5 étant munie à son extrémité opposée au flotteur 4 d'un arrêt formant simultanément une poignée de manutention 7.

Du côté s'appuyant sur le verre 2, le corps 1 présente un évidement 8 permettant le logement du flotteur 4 en position de remplissage total du verre 2 ou lorsque le dispositif est posé sur un support quelconque en position de non utilisation. Cet évidement 8 ainsi que le réceptacle 3 peuvent avoir une forme et une section quelconques, l'évidement 8 devant simplement permettre un escamotage complet du flotteur 4 dans le volume délimité avec la face inférieure du corps 1.

Le corps 1 présente, en outre, un rebord périphérique 9 de maintien sur le verre 2 délimitant la face d'appui 10 sur ledit verre 2, ladite face d'appui 10 pouvant être plane ou simplement constituer le prolongement de l'évidement 8.

Selon une autre caractéristique de l'invention, l'évidement 8 est pourvu, au niveau de sa jonction avec le canal de décharge 6 du réceptacle 3, d'un appendice circulaire de guidage 11 à pente inversée par rapport à celle de l'évidement 8, de préférence avec une conicité en direction de la tige 5 du flotteur 4. Cet appendice 11 est destiné à favoriser l'écoulement du liquide provenant du réceptacle 3 le long de la tige 5 en direction du flotteur 4 et à éviter tout écoulement parasite le long de la paroi de l'évidement 8.

En outre, la liaison entre le flotteur 4 et la tige 5 est réalisée par l'intermédiaire d'une partie de jonction 16 formée par deux troncs de cônes superposés, dont le plus petit détermine, d'une part, autour de la tige 5 un réceptacle conique inversé 17 et, d'autre part, avec le plus grand, un deuxième réceptacle sous forme d'une gorge annulaire 18, l'extrémité supérieure de cette partie 16 coopérant, par forme, avec l'appendice circulaire de guidage 11 dans la position extrême supérieure du flotteur 4. Ainsi, lorsque le verre 2 est rempli ou lorsque le dispositif est soulevé par traction sur la poignée 7, l'écoulement de liquide est instantanément interrompu et un débordement ou un déversement accidentel est impossible.

Ces réceptacles 17 et 18 sont destinés à favoriser une répartition uniforme sur toute la surface de la pièce 16, jusqu'à la jonction avec le flotteur 4 du liquide à verser en couches dans le verre 2.

Afin d'améliorer encore l'écoulement laminaire du liquide, le flotteur 4 est avantageusement pourvu d'un traitement de surface spécifique lui conférant une microporosité superficielle et une rugosité, par roulage dans un mélange de silice et de détergent ammoniaqué. Un tel traitement de surface permet d'assurer un écoulement parfaitement laminaire du liquide sur toute la surface du flotteur 4 et donc une répartition parfaite du liquide par couches, sans remous.

Selon une autre caractéristique de l'invention, le canal de décharge présente un rapport de diamètre de passage avec le diamètre de la tige 5 égal à 1,7, avec des diamètres respectifs préférentiels de 3,4 mm et de 2 mm et le flotteur 4 présente avantageusement un diamètre de 42 mm. Ces dimensions permettent l'obtention d'un écoulement optimal de tous les liquides communément utilisés avec une superposition sans mélange.

Si le rapport entre les diamètres du canal de décharge 6 et de la tige 5 était plus grand, l'écoulement du liquide serait trop rapide et risquerait de provoquer des remous dans le verre 2, tandis qu'un rapport moindre ne permettrait pas l'écoulement de tous les liquides.

Conformément à une variante de réalisation de l'invention, non représentée aux dessins annexés, le rebord périphérique 9 de maintien sur le verre 2, qui équipe la partie inférieure du corps 1 au niveau de sa face d'appui 10 sur le verre 2, peut également être réalisé sous forme d'un dispositif élastique ou réglable permettant une adaptation à des verres de diamètres très différents tout en assurant le maintien du corps 1 sur cesdits verres.

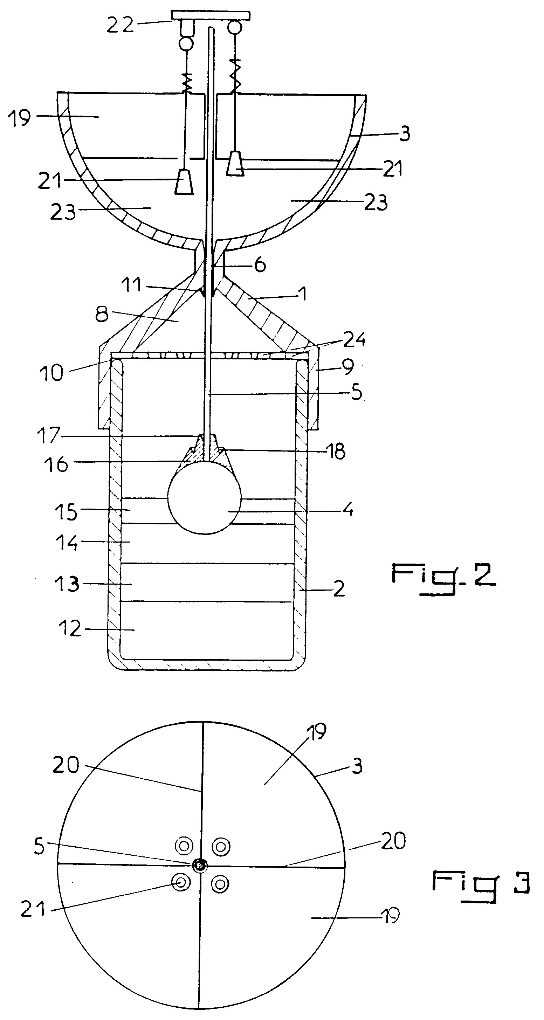

Les figures 2 et 3 des dessins annexés représentent une variante de réalisation de l'invention, dans laquelle le réceptacle 3 est divisé en plusieurs compartiments 19 par l'intermédiaire de parois verticales 20 s'étendant radialement autour du canal 6 de guidage de la tige 5 du flotteur 4, ces compartiments 19 étant reliés, par l'intermédiaire de vannes coniques à ressort 21, ou analogues, manoeuvrables chacune au moyen d'un bouton 22, à une chambre de décharge 23 communiquant avec le canal de guidage 6. Ainsi, il est possible de remplir les compartiments 19 du réceptacle 4 de plusieurs liquides à superposer et de provoquer l'écoulement de ceux-ci dans le verre 2 par un actionnement successif et prédéterminé des boutons 22.

Les boutons 22 peuvent avantageusement être numérotés afin de permettre à l'utilisateur de repérer les compartiments en fonction des densités des liquides.

Selon une autre caractéristique de l'invention, non représentée aux dessins annexés, le canal de guidage 6 peut avantageusement être prolongé au-dessus des compartiments 19 et des boutons de manoeuvre 22 des vannes coniques à ressort 21 et être muni d'un disque à came d'actionnement successif des boutons 22, pourvu d'un repère de position. Un tel disque permet, par simple rotation, d'amener sa came successivement sur chaque bouton 22, en fonction d'un sens de rotation prédéterminé, afin de maintenir sa vanne 21 correspondante en position ouverte, le repère de position permettant de contrôler instantanément la vanne 21 en service. Ainsi, il est possible d'utiliser simultanément plusieurs dispositifs conformes à l'invention, sans être obligé de les surveiller individuellement ou d'en assurer le fonctionnement. Un tel mode de réalisation permet donc d'augmenter sensiblement la cadence de production d'une boisson donnée.

Il est également possible, suivant une autre variante de réalisation de l'invention, non représentée aux dessins annexés, d'actioner les vannes 21 électriquement au moyen de petits électro-aimants mis sous tension par l'intermédiaire de palpeurs de détection de niveau de liquide dans les compartiments 19, l'ensemble des circuits électriques de commande et de détection étant relié à un automate programmable. Un tel mode de réalisation permet l'obtention d'un dispositif à grand débit.

Enfin, l'invention a également pour objet un dispositif, non représenté, dont le réceptacle 3 est avantageusement relié à une alimentation automatique de liquides constitué par des conduites reliées par l'intermédiaire de pompes spécifiques à divers réservoirs de liquide, lesdites pompes étant individuellement actionnées par l'intermédiaire d'un automate programmable en fonction du type de préparation à réaliser. Dans un tel cas, il est parfaitement envisageable de mémoriser un certain nombre de préparations prédéterminées, avec leur séquence d'amenée des liquides en fonction de la densité de ces derniers et de distribuer lesdits liquides par simple affichage de la préparation choisie.

Enfin, selon une autre caractéristique de l'invention, la face d'appui 10 sur le verre 2 du corps 1 est pourvue, de préférence, de nervures radiales 24 d'appui sur ledit verre 2. De telles nervures 24 permettent, notamment, de faciliter le passage de l'air d'évent pendant le remplissage du verre 2.

Les diverses parties constitutives du dispositif conforme à l'invention peuvent être réalisées en toutes matières permettant un usage à des fins alimentaires, à savoir, par moulage, par formage ou par usinage.

Le dispositif conforme à l'invention est utilisé de la manière suivante :
Le liquide 12 de plus forte densité est versé directement dans le verre 2 et le corps 1 est mis en place sur ledit verre 2, le flotteur 4 du dispositif étant humecté afin de permettre un écoulement de liquide sur toute sa surface, par plongée directe dans le premier liquide 12 ou par passage préalable, avant mise en place du corps 1, sous l'eau d'un robinet. Le second liquide 13, de moindre densité que le premier, est alors versé dans le réceptacle 3 du corps 1 et s'écoute à travers le canal de décharge 6 le long de la tige 5 et du flotteur 4. Du fait de l'écoulement laminaire le long du flotteur 4, le second liquide 13 s'étale au-dessus du liquide 12 sans se mélanger à ce dernier. Ensuite, le liquide 14, de densité inférieure à celle du liquide 13, est mis en place de la même manière et le liquide 15, de densité encore plus faible, est également mis en place. Cette dernière opération est représentée plus particulièrement à la figure 1 des dessins annexés.

Une mise en place, dans un même verre, de liquides de densités différentes et, de préférence, de couleurs différentes_{,} sans mélange de ces liquides entre eux, donc en couches parfaitement distinctes est rendue possible par le fait que chaque liquide, lors de sa mise en place est "déposé" sur le liquide précédent de manière très douce, c'est-à-dire sans aucun remou susceptible de provoquer le mélange entre les liquides en contact.

Grâce à l'invention, il est possible de réaliser un dispositif permettant une superposition de plusieurs liquides de densités et de couleurs différentes_{,} les densités étant décroissantes du bas vers le haut, dans un verre et utilisable par des opérateurs n'ayant pas subi un entraînement spécifique.

L'invention est plus particulièrement applicable dans le domaine de la restauration, notamment pour la préparation d'apéritifs ou de desserts composés de plusieurs liquides, en permettant une présentation originale et alléchante pour le consommateur.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention tel que défini par les revendications.

## Revendications

1. Dispositif pour la présentation en couches superposées de liquides de différentes densités, en particulier de liquides alimentaires, essentiellement constitué par un corps (1) destiné à être monté sur un verre à remplir (2), et présentant un réceptacle (3) de réception des liquides, du côté opposé à celui s'appuyant sur le verre (2), et par un flotteur (4) venant au contact du liquide dans le verre (2) et relié à une tige (5) guidée dans le corps (1), caractérisé en ce que le flotteur (4) est sphérique et en ce que la tige (5) est guidée dans un canal de décharge (6) du réceptacle (3) de réception des liquides en direction du verre (2), aménagé dans le corps (1) et débouchant dans ledit réceptacle (3), cette tige (5) étant munie à son extrémité opposée au flotteur (4) d'un arrêt formant simultanément une poignée de manutention (7).

2. Dispositif, suivant la revendication 1, caractérisé en ce que, du côté s'appuyant sur le verre (2), le corps (1) présente un évidement (8) permettant le logement du flotteur (4) en position de remplissage total du verre (2) ou lorsque le dispositif est posé sur un support quelconque en position de non utilisation.

3. Dispositif, suivant l'une quelconque des revendications 1 et 2, caractérisé en ce que le corps (1) présente, en outre, un rebord périphérique (9) de maintien sur le verre (2) délimitant la face d'appui (10) sur ledit verre (2), ladite face d'appui (10) pouvant être plane ou simplement constituer le prolongement de l'évidement (8).

4. Dispositif, suivant l'une quelconque des revendications 1 à 3, caractérisé en ce que l'évidement (8) est pourvu, au niveau de sa jonction avec le canal de décharge (6) du réceptacle (3), d'un appendice circulaire de guidage (11) à pente inversée par rapport à celle de l'évidement (8), de préférence avec une conicité en direction de la tige (5) du flotteur (4).

5. Dispositif, suivant l'une quelconque des revendications 1 et 4, caractérisé en ce que la liaison entre le flotteur (4) et la tige (5) est réalisée par l'intermédiaire d'une partie de jonction (16) formée par deux troncs de cônes superposés, dont le plus petit détermine, d'une part, autour de la tige (5) un réceptacle conique inversé (17) et, d'autre part, avec le plus grand, un deuxième réceptacle sous forme d'une gorge annulaire (18), l'extrémité supérieure de cette partie (16) coopérant, par forme, avec l'appendice circulaire de guidage (11) dans la position extrême supérieure du flotteur (4).

6. Dispositif, suivant l'une quelconque des revendications 1, 4 et 5, caractérisé en ce que le flotteur (4) est avantageusement pourvu d'un traitement de surface spécifique lui conférant une microporosité superficielle et une rugosité, par roulage dans un mélange de silice et de détergent ammoniaqué.

7. Dispositif, suivant l'une quelconque des revendications 1 et 4 à 6, caractérisé en ce que le canal de décharge (6) présente un rapport de diamètre de passage avec le diamètre de la tige (5) égal à 1,7, avec des diamètres respectifs préférentiels de 3,4 mm et de 2 mm et le flotteur (4) présente avantageusement un diamètre de 42 mm.

8. Dispositif, suivant la revendication 3, caractérisé en ce que le rebord périphérique (9) de maintien sur le verre (2), qui équipe la partie inférieure du corps (1) au niveau de sa face d'appui (10) sur le verre (2), est réalisé sous forme d'un dispositif élastique ou réglable permettant une adaptation à des verres de diamètres très différents tout en assurant le maintien du corps (1) sur cesdits verres.

9. Dispositif, suivant la revendication 1, caractérisé en ce que le réceptacle (3) est divisé en plusieurs compartiments (19) par l'intermédiaire de parois verticales (20) s'étendant radialement autour du canal (6) de guidage de la tige (5) du flotteur (4), ces compartiments (19) étant reliés, par l'intermédiaire de vannes coniques à ressort (21), ou analogues, manoeuvrables chacune au moyen d'un bouton (22), à une chambre de décharge (23) communiquant avec le canal de guidage (6).

10. Dispositif, suivant la revendication 9, caractérisé en ce que les boutons (22) peuvent avantageusement être numérotés afin de permettre à l'utilisateur de repérer les compartiments en fonction des densités des liquides.

11. Dispositif, suivant l'une quelconque des revendications 9 et 10, caractérisé en ce que le canal de guidage (6) peut avantageusement être prolongé au-dessus des compartiments (19) et des boutons de manoeuvre (22) des vannes coniques à ressort (21) et être muni d'un disque à came d'actionnement successif des boutons (22), pourvu d'un repère de position.

12. Dispositif, suivant la revendication 9, caractérisé en ce que les vannes (21) sont actionnées électriquement au moyen de petits électro-aimants mis sous tension par l'intermédiaire de palpeurs de détection de niveau de liquide dans les compartiments (19), l'ensemble des circuits électriques de commande et de détection étant relié à un automate programmable.

13. Dispositif, suivant la revendication 1, caractérisé en ce que le réceptacle (3) est avantageuse-ment relié à une alimentation automatique de liquides constitué par des conduites reliées par l'intermédiaire de pompes spécifiques à divers réservoirs de liquide, lesdites pompes étant individuellement actionnées par l'intermédiaire d'un automate programmable en fonction du type de préparation à réaliser.

14. Dispositif, suivant l'une quelconque des revendications 1 à 13, caractérisé en ce que la face d'appui (10) sur le verre (2) du corps (1) est pourvue, de préférence, de nervures radiales (24) d'appui sur ledit verre (2).

## Claims

1. Device for the presentation, in superimposed layers, of different density liquids, in particular liquid foods, essentially consisting off a body (1) for mounting on a glass to be filled (2) and having a receiving vessel (3) for liquids on the side remote from that resting against the glass (2) and of a float (4) making contact with the liquid in the glass (2) and connected to a rod (5) guided in the body (1), characterized in that the float (4) is spherical and in that the rod (5) is guided in a discharge channel (6) of the vessel (3) for receiving liquids in the direction of the glass (2) arranged in the body (1) and opening into said vessel (3), this rod (5) being equipped at its end remote from the float (4) with a stop device simultaneously forming a grip for handling (7).

2. Device according to claim 1, characterised in that, on the side resting against the glass (2), the body (1) has a recess (8) allowing the housing of the float (4) in the completely filled position of the glass (2) or when the device is placed on any support in the position of non-use.

3. Device according to any one of claims 1 and 2, characterised in that the body (1) also has a peripheral rim (9) for holding it on the glass (2) and delimiting the face (10) for support on said glass (2), wherein said supporting face (10) may be plane or may merely constitute the extension of the recess (8).

4. Device according to any one of claims 1 to 3, characterised in that the recess (8) is provided, in the region where it joins the discharge channel (6) of the vessel (3), with a circular guiding attachment (11) having an inclination which is inverted relative to that of the recess (8), preferably with conicity in the direction of the rod (5) of the float (4).

5. Device according to any one of claims 1 and 4, characterized in that the connection between the float (4) and the rod (5) is produced by means of a connecting piece (16) formed by two superimposed truncated cones of which the smaller one determines, on the one hand, an inverted conical vessel (17) round the rod (5) and, on the other hand, with the greater one, a second vessel in the form of an annular groove (10), the upper end of this part (16) cooperating in shape with the circular guiding attachment (11) in the extreme upper position of the float (4).

6. Device according to any one of claims 1, 4 and 5 characterised in that the float (4) is advantageously provided with a specific surface treatment giving it superficial microporosity and roughness by rolling in a mixture of silica and ammonia-containing detergent.

7. Device according to any one of claims 1 and 4 to 6, characterized in that the discharge channel (6) has a ratio of passage diameter to the diameter of the rod (5) which is equal to 1.7, with preferred respective diameters of 3.4 mm and of 2 mm and the float (4) advantageously has a diameter of 42 mm.

8. Device according to claim 3, characterized in that the peripheral rim (9) for holding on the glass (2) with which the lower part of the body (1) is equipped in the region of its face (10) for support on the glass (2) is produced in the form of an elastic or adjustable device allowing adaptation to glasses of very different diameters while holding the body (1) on said glasses.

9. Device according to claim 1, characterised in that the vessel (3) is divided into several compartments (19) by means of vertical walls (20) extending radially round the channel (6) for guiding the rod (5) of the float (4), these compartments (19) being connected by means of spring-loaded conical valves (21) or the like which may each be manoeuvred by means of a button (22) to a discharge chamber (23) communicating with the guide channel (6).

10. Device according to claim 9, characterised in that the buttons (22) can advantageously be numbered to allow the user to identify the compartments as a function of the densities of the liquids.

11. Device according to any one of claims 9 and 10, characterised in that the guide channel (6) may advantageously be extended above the compartments (19) and the buttons (22) for manoeuvring the spring-loaded conical valves (21) and may advantageously be equipped with a cam disc for successive actuation of the buttons (22) provided with a position marker.

12. Device according to claim 9, characterized in that the valves (21) are actuated electrically by means of small electromagnets which are made alive by means of feelers for detecting the level of liquid in the compartments (19), all the electric control and detecting circuits being connected to a programmable automaton.

13. Device according to claim 1, characterised in that the vessel (3) is advantageously connected to an automatic supply of liquids constituted by conduits connected by means of specific pumps to various reservoirs of liquid, said pumps being actuated individually by means of a programmable automaton as a function of the type of preparation to be carried out.

14. Device according to any one of claims 1 to 13, characterized in that the face (10) for supporting the body (1) against the glass (2) is preferably provided with radial ribs (24) for support on said glass (2).

## Patentansprüche

1. Vorrichtung für die Anordnung von Flüssigkeiten unterschiedlicher Dichten, insbesondere von Getränken, in übereinandergelagerten Schichten, im wesentlichen gebildet durch einen zur Anbringung auf einem zu füllenden Glas (2) bestimmten Körper (1), der auf seiner der sich auf dem Glas (2) abstützenden Seite gegenüberliegenden Seite einen Behälter (3) zur Aufnahme der Flüssigkeiten aufweist, sowie durch einen Schwimmer (4), der mit der Flüssigkeit in dem Glas (2) in Berührung gelangt und mit einem in dem Körper (1) geführten Schaft (5) verbunden ist, dadurch gekennzeichnet, daß der Schwimmer (4) kugelförmig ist und daß der Schaft (5) in einem Abgabekanal (6) des Behälters (3) zur Aufnahme der Flüssigkeiten in Richtung des Glases (2) geführt ist, der in dem Körper (1) angeordnet ist und in dem Behälter (3) mündet, wobei der Schaft (5) an seinem dem Schwimmer (4) entgegengesetzten Ende mit einem Anschlag versehen ist, der gleichzeitig einen Handhabungsgriff (7) bildet.

2. Vorrichtung nach Anspruch 1, dadurch gekennzeichnet, daß der Körper (1) auf der sich auf dem Glas (2) abstützenden Seite eine Aussparung (8) aufweist, die die Unterbringung dem Schwimmers (4) in der vollständig gefüllten Position des Glases (2) oder dann ermöglicht, wenn die Vorrichtung auf irgendeine Unterlage während des Nichtgebrauchs gelegt wird.

3. Vorrichtung nach einem der Ansprüche 1 und 2, dadurch gekennzeichnet, daß der Körper (1) darüber hinaus einen Umfangsrand (9) der Halterung auf dem Glas (2) aufweist, der die Aufstützfläche (10) auf dem Glas (2) begrenzt, wobei die Aufstützfläche (10) entweder eben sein oder einfach die Verlängerung der Aussparung (8) bilden kann.

4. Vorrichtung nach einem der Ansprüche 1 bis 3, dadurch gekennzeichnet, daß die Aussparung (8) in der Höhe ihrer Verbindung mit dem Ausgabekanal (6) des Behälters (3) mit einem kreisförmigen Führungsfortsatz (11) mit einer gegenüber der Neigung der Aussparung (8) umgekehrten Neigung versehen ist, vorzugsweise mit einer Konizität in Richtung auf den Schaft (5) des Schwimmers (4).

5. Vorrichtung nach einem der Ansprüche 1 bis 4, dadurch gekennzeichnet, daß die Verbindung zwischen dem Schwimmer (4) und dem Schaft (5) über ein Verbindungsteil (16) verwirklicht ist, das von zwei übereinander angeordneten Kegelstümpfen gebildet ist, von denen der kleinere einerseits um den Schaft (5) herum ein umgekehrtes konisches Behältnis (17) und andererseits mit dem größeren ein zweites Behältnis in Form einer ringförmigen Nut (18) bildet, wobei das obere Ende dieses Teils (16) durch seine Form mit dem kreisförmigen Führungsfortsatz (11) in der extremen oberen Position des Schwimmers (4) zusammenwirkt.

6. Vorrichtung nach einem der Ansprüche 1, 4 und 5, dadurch gekennzeichnet, daß der Schwimmer (4) vorteilhafterweise mit einer ihm eine oberflächliche Mikroporosität und eine Rauhigkeit verleihenden speziellen Oberflächenbehandlung durch Rollen in einer Mischung aus Kieselerde und einem ammoniakalischen Detergens versehen ist.

7. Vorrichtung nach einem der Ansprüche 1 und 4 bis 6, dadurch gekennzeichnet, daß der Abgabekanal (6) ein Verhältnis von Durchgangsdurchmesser zu dem Durchmesser des Schafts (5) gleich 1,7 aufweist, wobei die bevorzugten jeweiligen Durchmesser 3,4 mm und 2 mm betragen und der Schwimmer (4) vorteilhafterweise einen Durchmesser von 42 mm aufweist.

8. Vorrichtung nach Anspruch 3, dadurch gekennzeichnet, daß der Umfangsrand (9) zur Halterung auf dem Glas (2), mit dem der untere Teil des Körpers (1) in Höhe seiner Aufstützfläche (10) auf dem Glas (2) versehen ist, in Form einer elastischen oder regelbaren Einrichtung verwirklicht ist, die eine Anpassung an Gläser mit sehr unterschiedlichen Durchmessern unter Gewährleistung der Halterung des Körpers (1) auf diesen Gläsern ermöglicht.

9. Vorrichtung nach Anspruch 1, dadurch gekennzeichnet, daß der Behälter (3) in mehrere Abteile (19) mit Hilfe von senkrechten sich radial um den Führungskanal (6) des Schafts (5) des Schwimmers (4) erstreckenden Wänden (20) unterteilt ist, wobei die Abteile (19) mit Hilfe konischer Federventile (21) o. dgl., die jeweils mit Hilfe eines Knopfs (22) betätigbar sind, mit einer Abgabekammer (23) verbunden sind, die mit dem Führungskanal (6) in Verbindung steht.

10. Vorrichtung nach Anspruch 9, dadurch gekennzeichnet, daß die Knöpfe (22) vorzugsweise numeriert sein können, um es dem Benutzer zu ermöglichen, die Abteile als Funktion der Dichten der Flüssigkeiten zu markieren.

11. Vorrichtung nach einem der Ansprüche 9 und 10, dadurch gekennzeichnet, daß der Führungskanal (6) vorzugsweise über die Abteile (19) und die Betätigungsknöpfe (22) der konischen Federventile (21) hinaus verlängert und mit einer Nockenscheibe zur aufeinanderfolgenden Betätigung der Knöpfe (22) versehen sein kann, die mit einer Positionsmarkierung versehen ist.

12. Vorrichtung nach Anspruch 9, dadurch gekennzeichnet, daß die Ventile (21) elektrisch mit Hilfe kleiner Elektromagnete betätigt werden, die über FlüssigkeitsstandsTaster in den Abteilen (19) unter Spannung gesetzt werden, wobei die Gesamtheit der elektrischen Steuer- und Detektorschaltungen mit einem programmierbaren Automaten verbunden ist.

13. Vorrichtung nach Anspruch 1, dadurch gekennzeichnet, daß der Behälter (3) vorteilhafterweise mit einer automatischen Flüssigkeitsversorgung verbunden ist, die von Leitungen gebildet wird, die über spezielle Pumpen mit verschiedenen Flüssigkeitsreservoirs verbunden sind, wobei diese Pumpen individuell über einen programmierbaren Automaten als Funktion des Typs des zu realisierenden Präparats betätigt werden.

14. Vorrichtung nach einem der Ansprüche 1 bis 13, dadurch gekennzeichnet, daß die Aufstützfläche (10) des Körpers (1) auf dem Glas (2) vorzugsweise mit radialen Rippen (24) zum Aufstützen auf dem Glas (2) versehen ist.
